(19) **Europäisches Patentamt**
**European Patent Office**
**Office européen des brevets**

(11) **EP 4 451 422 B1**

(12) **EUROPEAN PATENT SPECIFICATION**

(45) Date of publication and mention
of the grant of the patent:
**10.06.2026 Bulletin 2026/24**

(21) Application number: **23883153.1**

(22) Date of filing: **27.10.2023**

(51) International Patent Classification (IPC):
*H01M 10/44* (2006.01)    *H01M 4/58* (2010.01)
*H01M 10/052* (2010.01)    *H02J 7/00* (2026.01)
*H01M 10/42* (2006.01)

(52) Cooperative Patent Classification (CPC):
**H01M 10/052; H01M 4/58; H01M 4/5825;
H01M 10/0525; H01M 10/42; H01M 10/44;
H01M 10/443; H02J 7/00; H02J 7/80; H02J 7/947;
H02J 7/96;** H01M 2010/4271; H01M 2220/20;
Y02E 60/10

(86) International application number:
**PCT/KR2023/016810**

(87) International publication number:
**WO 2024/091048 (02.05.2024 Gazette 2024/18)**

(54) **SPLIT CHARGING/DISCHARGING METHOD FOR SECONDARY BATTERY, BATTERY MANAGEMENT SYSTEM, AND BATTERY PACK COMPRISING SAME**

GETEILTES LADE-/ENTLADEVERFAHREN FÜR SEKUNDÄRBATTERIE, BATTERIEVERWALTUNGSSYSTEM UND BATTERIEPACK DAMIT

PROCÉDÉ DE CHARGE/DÉCHARGE DIVISÉE POUR BATTERIE SECONDAIRE, SYSTÈME DE GESTION DE BATTERIE ET BLOC-BATTERIE LE COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.10.2022 KR 20220141689**

(43) Date of publication of application:
**23.10.2024 Bulletin 2024/43**

(73) Proprietor: **LG Energy Solution, Ltd.**
**Seoul 07335 (KR)**

(72) Inventors:
• **KIM, Hye Jin**
**Daejeon 34122 (KR)**
• **KIM, Ki Woong**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
CN-U- 207 852 740       JP-A- 2000 164 260
JP-A- 2001 074 279       JP-A- 2009 181 910
JP-A- H10 255 854       JP-B2- 6 477 733
KR-A- 20110 022 556

• CHENG XI-MING ET AL: "Lithium-ion battery state-of-charge estimation based on deconstructed equivalent circuit at different open-circuit voltage relaxation times", JOURNAL OF ZHEJIANG UNIVERSITY SCIENCE A, ZHEIJIANG UNIVERSITY PRESS, CN, vol. 18, no. 4, 11 April 2017 (2017-04-11), pages 256 - 267, XP036209211, ISSN: 1673-565X, [retrieved on 20170411], DOI: 10.1631/JZUS.A1600251

**Description**

[Technical Field]

The present invention relates to a method for charging and discharging secondary batteries, a battery management system, and a battery pack including the same.

More specifically, the present invention relates to a cycle evaluation method for secondary batteries, a battery management system, and a battery pack including the same, for repeatedly charging and discharging within a specific range of state of charge/discharge intervals when charging and discharging secondary batteries applied with lithium iron phosphate as the positive electrode material, while maintaining the state of charge/discharge intervals constant.

[Background Technology of the Invention]

As technology development and demand for electric vehicles and energy storage systems (ESS) increases, the demand for batteries as an energy source is rapidly increasing, and research is being conducted on batteries that can meet various needs. In particular, lithium secondary batteries, which have high energy density and excellent life and cycle characteristics, are being actively researched as a power source for these devices.

Lithium cobalt oxide (LCO), lithium nickel cobalt manganese oxide (LNCMO), and lithium iron phosphate (LFP) are used as positive electrode active materials in lithium secondary batteries. Lithium iron phosphate batteries, despite having a lower operating voltage range compared to widely used lithium nickel cobalt manganese oxide batteries, have the advantage of stable operating characteristics due to their olivine structure, in contrast to lithium transition metal oxides having a layered or spinel structure.

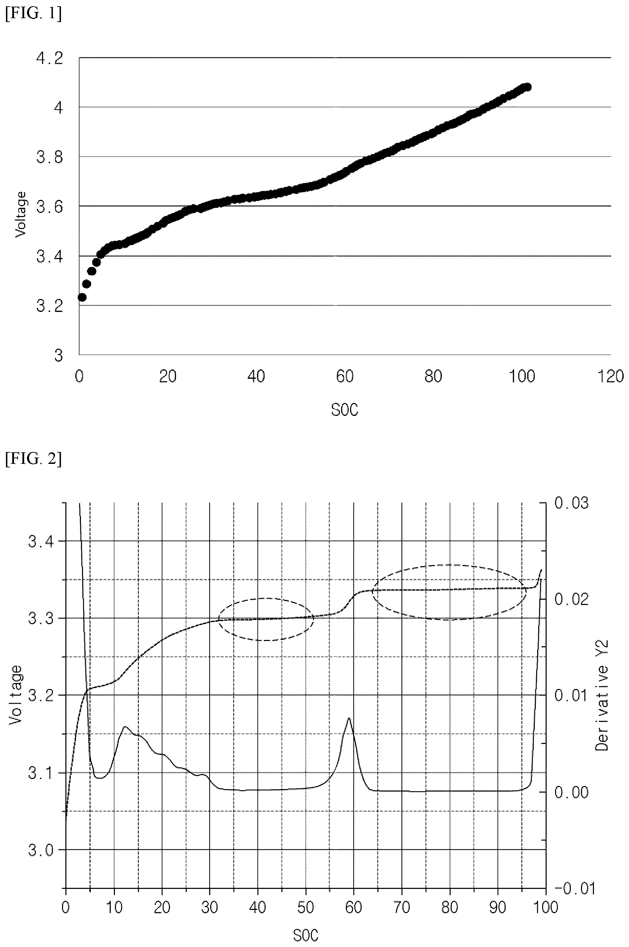

FIG.1 illustrates the profile of an open-circuit voltage according to the state of charge (SOC) of a lithium nickel cobalt manganese oxide battery, while FIG. 2 illustrates the profile of an open-circuit voltage according to the state of charge of a lithium iron phosphate battery. Referring to these diagrams, lithium nickel cobalt manganese oxide batteries have a graph shape where the voltage increases as the state of charge increases, so the state of charge can be estimated from open-circuit voltage measurements. On the other hand, for lithium iron phosphate batteries, at certain state of charge, the graph has a flat shape with zero or near-zero voltage change as the state of charge increases, and this is known as the plateau interval. In this plateau interval, the open-circuit voltage of the battery cannot be used to accurately determine the state of charge.

Meanwhile, when evaluating the cycle characteristics of a secondary battery or operating a secondary battery, it is often necessary to repeatedly charge and discharge a certain range of state of charge (discharge), such as SOC 50% to SOC 100%, which is referred to as segmented charge and discharge. Specifically, the segmented charge/discharge method for charging and discharging a range of state of charge between SOC a and SOC b is to charge and discharge the secondary battery, wherein a voltage value corresponding to SOC a and a voltage value corresponding to SOC b are known in advance, and when charging the secondary battery, the secondary battery is charged and the charging is terminated when the voltage of the secondary battery reaches the voltage value corresponding to SOC b. When discharging the secondary battery, the secondary battery is discharged and the discharging is terminated when the voltage of the secondary battery reaches the voltage value corresponding to SOC a. During charging and discharging of a secondary battery, it is easier to measure the voltage than to measure the SOC, so charging and discharging are usually terminated based on the voltage measurement value.

However, during the segmented charging and discharging of lithium iron phosphate batteries, it is not possible to accurately estimate SOC from the voltage measurement values in the plateau interval. Therefore, if discharging is ended based on voltage values, discharging might end before reaching the set SOC a. Referring to FIG.2, if the state of charge interval of segmented charging and discharging is assumed to be between SOC 70% to SOC 100%, during discharge, it is required to discharge down to SOC 70%. However, since the voltage values measured between SOC 70% to SOC 95% are similar, discharge might end at only SOC 80%.

An alternative is to terminate the discharge based on capacity, but this does not account for capacity degradation over the course of a charge/discharge cycle, so the charge/discharge interval may not remain constant over repeated cycles.

Therefore, it is necessary to develop a technology that can repeat the charge and discharge during segmented charge/discharge of a lithium iron phosphate battery, while keeping the charge/discharge intervals constant.

CN 207 852 740 U describes a repetitive charging and discharging procedure based on the battery reaching upper and lower voltage thresholds. JP 6 477733 B2 describes the use of coulomb counting (integration of current) in ranges of SOC corresponding to plateaus (low change in voltage for a change in SOC), with the SOC being reset by an absolute calculation based on voltage in ranges of SOC outside the plateau. Cheng Xi-Ming et al., "Lithium-ion battery state-of-charge estimation based on deconstructed equivalent circuit at different open-circuit voltage relaxation times", Journal of Zhejiang University Science A, Zhejiang University Press, CN, vol. 18, no. 4, 2017-04-11, pp. 256-267, describes the use of coulomb efficiency when integrating currents.

[Description of the Invention]

[Technical Problem]

The present invention aims to provide a method for repeatedly charging and discharging during segmented charge/discharge of a lithium iron phosphate battery, while keeping the charge/discharge intervals constant.
In addition, the present invention aims to provide a charging and discharging method that reflects the capacity degradation during the segmented charge/discharge of a lithium iron phosphate battery of the present invention.

[Technical Solution]

According to an exemplary embodiment of the invention, a segmented charge and discharge method charges/discharges a secondary battery within a state of charge interval from SOC a to SOC b, and includes: a charging process for charging the secondary battery; and a discharging process for discharging the charged secondary battery, and these charging and discharging processes are repeated, wherein the charging process ends charging when a measured voltage value of the secondary battery reaches an end-of-charge reference voltage, and the discharging process ends discharging when a measured discharge capacity reaches a value equal to a capacity $Q_c$ charged during the charging process multiplied by a Coulombic efficiency.
(where a<b, and a is a value greater than or equal to 0% and less than 100%, and b is a value greater than 0% and less than or equal to 100%)
In an exemplary embodiment of the present invention, the secondary battery includes lithium iron phosphate as a positive electrode active material.
In an exemplary embodiment of the present invention, the Coulombic efficiency may be calculated by substituting the charge and discharge capacities measured in a random charge and discharge cycle for the secondary battery subject to charge and discharge into an equation 1 below:

$$\text{Coulombic efficiency} = (\text{discharge capacity} \times 100) / \text{charge capacity}.$$

In an exemplary embodiment of the present invention, SOC a may be set within a state of charge range of a plateau interval where a rate of change in voltage (dV/dQ) with respect to a capacity change of the secondary battery is 0.
In an exemplary embodiment of the present invention, SOC b may be set outside a state of charge range of the plateau interval.
In an exemplary embodiment of the present invention, the end-of-charge reference voltage may be set to a voltage value corresponding to SOC b in a profile of a voltage according to a state of charge of the secondary battery to be charged and discharged.
In an exemplary embodiment of the present invention, each of the charging and discharging processes may further include measuring at least one of voltage, current, temperature, capacity, and resistance of the secondary battery.
A battery management system according to an exemplary embodiment of the present invention may include: a sensing part for measuring at least one of voltage, current, temperature, capacity, and resistance of the secondary battery; a control part for controlling the charge and discharge of the secondary battery according to a charge/discharge control algorithm, wherein the charge/discharge control algorithm may be configured to repeatedly charge and discharge the secondary battery over a state of charge interval from SOC a to SOC b, wherein during charging, the charging is terminated when a measured voltage value of the secondary battery reaches an end-of-charge reference voltage, and during discharging, the discharging is terminated when a measured discharge capacity reaches a value equal to a capacity $Q_c$ charged during the charging process multiplied by a Coulombic efficiency.
In an exemplary embodiment of the present invention, the Coulombic efficiency may be calculated by substituting charge and discharge capacities measured in a random charge and discharge cycle for the secondary battery subject to charge and discharge into and equation 1 below:

$$\text{Coulombic efficiency} = (\text{discharge capacity} \times 100) / \text{charge capacity}.$$

A battery management system according to an exemplary embodiment of the present invention may further include: a memory part for storing the Coulombic efficiency, the end-of-charge reference voltage, and measurement values measured by the sensing part of the secondary battery.

In an exemplary embodiment of the present invention, the charge/discharge control algorithm may be configured to set SOC a within a state of charge range of a plateau interval where a rate of change in voltage (dV/dQ) with respect to a capacity change of the secondary battery is 0.

In an exemplary embodiment of the present invention, the charge/discharge control algorithm may be configured to set SOC b outside a state of charge range of the plateau interval.

In an exemplary embodiment of the present invention, the end-of-charge reference voltage may be set to a voltage value corresponding to SOC b in a profile of a voltage according to a state of charge of the secondary battery to be charged and discharged.

A battery management system according to another exemplary embodiment of the present invention may further include a switching part for turning on and off the electrical connection between the secondary battery and the charger.

A battery pack according to an exemplary embodiment of the present invention includes: a battery management system according to the present invention; and a plurality of secondary batteries including lithium iron phosphate as a positive electrode active material.

[Advantageous Effects]

The segmented charge and discharge method, battery management system, and battery pack according to the present invention have the effect of being able to maintain consistent charging and discharging intervals while repeating charging and discharging during the segmented charging and discharging of lithium iron phosphate batteries.

Additionally, the segmented charging and discharging method, battery management system, and battery pack of the present invention can charge and discharge while reflecting capacity degradation during the segmented charging and discharging of lithium iron phosphate batteries.

[Brief Description of the Drawings]

FIG. 1 is a diagram illustrating a profile of an open-circuit voltage according to the state of charge (SOC) of a lithium nickel cobalt manganese oxide battery.

FIG. 2 is a diagram illustrating a profile of an open-circuit voltage according to the state of charge of a lithium iron phosphate battery.

FIG. 3 is a graph showing a capacity retention rate and Coulombic efficiency according to the charge and discharge cycles of a lithium iron phosphate battery.

FIG. 4 is a diagram to explain a concept of segmented charge and discharge method according to the present invention.

FIG. 5 is a flowchart of a segmented charge and discharge method according to an exemplary embodiment of the present invention.

FIG. 6 is a conceptual diagram to explain a concept of capacity discharged during a discharge process according to the present invention.

FIG. 7 is a diagram illustrating an exemplary configuration of a battery pack including a battery management system according to an exemplary embodiment of the present invention.

FIG. 8 is a block diagram schematically illustrating a battery management system according to an exemplary embodiment of the present invention.

FIG. 9 is a schematic diagram of a battery pack including a battery management system according to another exemplary embodiment of the present invention.

[Best Mode for Carrying out the Invention]

The terms and words used in this specification and claims should not be construed in a limited or merely dictionary sense, but should be interpreted according to the meaning and concept consistent with the present invention, based on the principle that the inventor is entitled to define terms in a way that best describes his invention.

Therefore, it should be understood that the embodiments described in this specification and the configurations illustrated in the drawings are merely the most preferred embodiments of the present invention and do not represent the present invention, so it should be understood that various modifications that could substitute for these embodiments may exist at the time of filing this application, said modifications being part of the present invention if they do not contradict the appended claims (i.e. if they comprise all features of at least one of the appended independent claims).

Furthermore, detailed descriptions of known configurations or functions related to the present invention may be omitted if it is judged that they may obscure the essence of the present invention.

Throughout the specification, when a part is said to "include" a component, it does not exclude other components unless specifically stated, implying that it can include additional components.

In addition, terms such as a control part mentioned in the specification refer to a unit that processes at least one function or operation, which may be implemented in hardware or software, or a combination of hardware and software.

Moreover, throughout the specification, when a part is said to be "connected" to another part, this includes not only cases where they are "directly connected" but also cases where they are "indirectly connected" with other elements in between.

In this specification, a 'Plateau interval' is defined herein as an interval of state of charge at which the rate of change in voltage (dV/dQ) for a change in capacity of a secondary battery is zero, but the plateau interval also includes intervals of state of charge at which the rate of change in voltage (dV/dQ) for a change in capacity is close to zero.

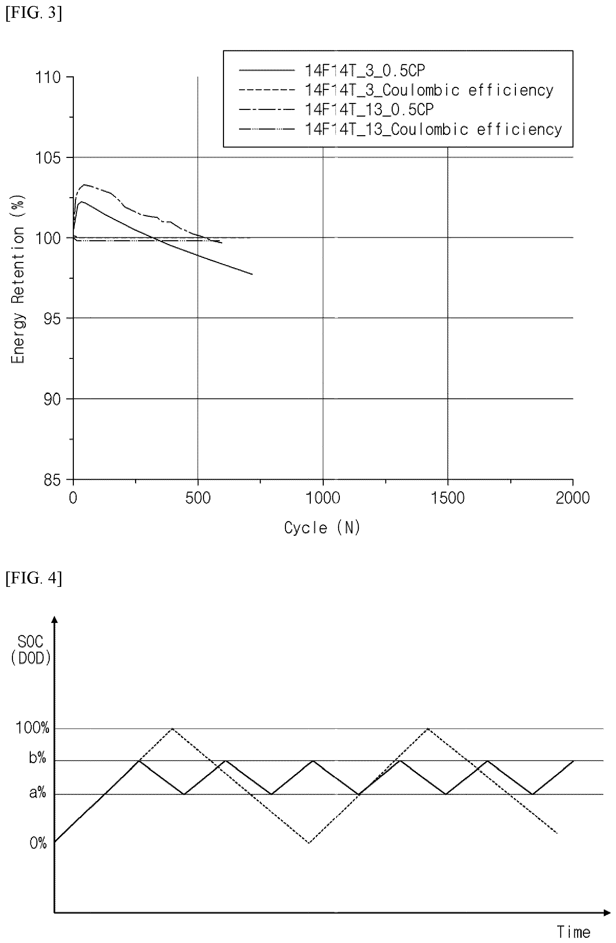

FIG. 4 is a diagram for explaining a concept of segmented charge and discharge method according to the present invention. The dashed line in FIG.4 shows the charge and discharge method, where a secondary battery with SOC 0% is fully charged until SOC 100% is reached, and then the fully charged secondary battery is fully discharged until SOC 0% is reached.

The solid line in FIG.4 represents the method of repeatedly charging and discharging a secondary battery within the state of charge intervals of SOC a to SOC b (where a<b, and a is a value greater than or equal to 0% and less than 100%, and b is a value greater than 0% and less than or equal to 100%). The charging and discharging method according to the solid line in FIG. 4 is a charging and discharging method in which, when charging, the charging is terminated when the state of charge of the secondary battery reaches SOC b, and when discharging, the discharging is terminated when the state of charge of the secondary battery reaches SOC a, but the charging and discharging is repeated. This charging and discharging method is called a segmented charge and discharge.

Secondary batteries are used by repeatedly charging and discharging, and in order to use the secondary battery for a long time, it is known that it is advantageous to repeat the segmented charging and discharging as described above rather than repeating full charging and full discharging.

Therefore, such a segmented charge and discharge method is not only set as a charge and discharge condition for performance evaluation of the secondary battery, but also needs to be set so that the secondary battery is charged and discharged according to the segmented charge and discharge method even after the product is shipped.

However, as described above, when performing a segmented charge and discharge for a secondary battery including lithium iron phosphate as the positive electrode active material of the positive electrode, it is difficult to accurately determine the state of charge of the battery through voltage measurements due to the presence of a plateau interval, and therefore, when terminating the discharge based on the voltage measurement value, it is possible to terminate the discharge before the intended state of charge is reached.

Therefore, the present invention aims to provide a discharge termination criterion during the discharge process in segmented charge and discharge of a secondary battery having a positive electrode including lithium iron phosphate.

The secondary battery to which the segmented charge and discharge method according to the present invention is applied includes lithium iron phosphate as a positive electrode active material. The lithium iron phosphate may be a compound of the following Chemical Formula 1.

[Chemical Formula 1] $\qquad$ $Li_{1+a}Fe_{1-x}M_x(PO_{4-b})X_b$

(In Chemical Formula 1, M includes one or more elements selected from the group consisting of Al, Mg, Ni, Co, Mn, Ti, Ga, Cu, V, Nb, Zr, Ce, In, Zn, and Y, and X includes one or more elements selected from the group consisting of F, S, and N, and a, b, and x are $-0.5 \leq a \leq 0.5$, $0 \leq b \leq 0.1$, and $0 \leq x \leq 0.5$, respectively)

For instance, the lithium iron phosphate may be $LiFePO_4$.

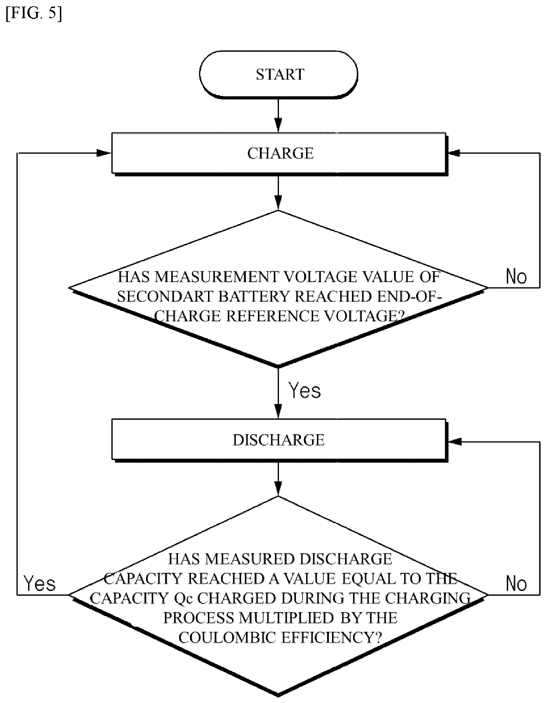

FIG. 5 is a flowchart of segmented charge and discharge method according to an exemplary embodiment of the invention. Referring to FIG. 5, the segmented charge and discharge method of a secondary battery according to the present invention charges/discharges a secondary battery within a state of charge interval from SOC a to SOC b, and includes: a charging process for charging the secondary battery; and a discharging process for discharging the charged secondary battery, and these charging and discharging processes are repeated, wherein the charging process ends charging when the measured voltage value of the secondary battery reaches an end-of-charge reference voltage, and the discharging process ends discharging when the measured discharge capacity reaches a value equal to the capacity Qc charged during the charging process multiplied by the Coulombic efficiency.

(where a<b, and a is a value greater than or equal to 0% and less than 100%, and b is a value greater than 0% and less than or equal to 100%)

The charging process comprises charging the secondary battery until the state of charge of the secondary battery reaches SOC b by charging. The charging process of the present invention is configured to terminate the charging when the voltage measured during charging of the secondary battery reaches an end-of-charge reference voltage.

In one specific example, the end-of-charge reference voltage may be set to a voltage value corresponding to SOC b in a profile of the voltage according to the state of charge of the secondary battery to be charged and discharged.

Referring to FIG. 2, this will be described in detail. For example, assuming that SOC b is SOC 100%, the voltage corresponding to SOC 100% in the profile of the voltage according to the state of charge shown in FIG. 2 is about 3.35 V. Therefore, the end-of-charge reference voltage is 3.35 V, and the charging is terminated when the voltage of the secondary battery measured during the charging process is 3.35 V.

Such an end-of-charge reference voltage may be a value set from a profile of voltage according to the state of charge obtained while performing a charge and discharge on the secondary battery to be charged and discharged in advance. In other words, the charging process of the present invention charges the secondary battery, monitors the voltage measurement values of the secondary battery, and terminates charging when the voltage measurement value reaches a predetermined end-of-charge reference voltage.

In addition, the charging process of the present invention may also include comparing the voltage measurement value to a predetermined end-of-charge reference voltage, and thus may include measuring the voltage of the secondary battery in real time or periodically during the charging process.

Preferably, the SOC b is set within a range of state of charge where the rate of change of the voltage (dV/dQ) with respect to the capacity change of the secondary battery is non-zero. This is because if the SOC b is set within a range of state of charge where the rate of change of the voltage (dV/dQ) with respect to the capacity change of the secondary battery is zero, the charging may be terminated before the target SOC b is reached. Here, the state of charge interval in which the rate of change of the voltage (dV/dQ) with respect to the capacity change of the secondary battery is zero refers to the plateau interval described above, and the state of charge interval in which the rate of change in the voltage (dV/dQ) with respect to the capacity change of the secondary battery is not zero refers to the state of charge interval other than the plateau interval.

Following the charging process, a discharging process is performed, potentially including a resting period between charging and discharging. The resting period, during which no charging or discharging occurs, can range from 20 minutes to 2 hours, and the duration may be selected based on the charge/discharge characteristics of the battery and charge/discharge objectives.

The discharging process is a process of discharging the secondary battery that has reached the state of charge of SOC b by the charging process until the state of charge is SOC a.

In the segmented charge and discharge method of charging and discharging the state of charge interval from SOC a to SOC b, if SOC a is set within the state of charge range of the plateau interval where the rate of change of voltage (dV/dQ) with respect to the capacity change of the secondary battery is zero, the discharge may be terminated before SOC b is reached if the discharge termination point is set based on the voltage in the same manner as the charging process. In the discharging process, it is possible to consider discharging as much as the capacity charged in the previous charging process, but this has the problem that it does not reflect the degradation due to the accumulation of charge and discharge cycles.

In order to repeat the charge and discharge with a constant state of charge/discharge interval, while reflecting the capacity degradation due to the accumulation of charge and discharge cycles during the discharge process, the present invention terminates the discharge when, during the discharge process, the measured discharge capacity reaches a value equal to the capacity Qc charged during the charge process multiplied by the Coulombic efficiency. That is, the discharging process ends discharging when it is discharged by a value equal to the capacity Qc charged during the charging process multiplied by the Coulombic efficiency.

FIG. 3 is a graph of capacity retention rate and Coulombic efficiency according to the charge and discharge cycles for a lithium iron phosphate battery. Referring to FIG. 3, it can be seen that as the number of charge and discharge cycles accumulates, the discharge capacity gradually decreases due to degradation. On the other hand, it can be seen that the Coulombic efficiency remains constant as the number of charge and discharge cycles accumulates.

In the discharge process of the segmented charge and discharge method, if the secondary battery is discharged by the capacity charged in the previous charge process, the capacity degradation due to the accumulation of charge-discharge cycles may not be reflected. Therefore, the segmented charge and discharge method according to the present invention terminates the discharge when the discharge capacity of the secondary battery measured during the discharge process reaches a value equal to the capacity Qc charged in the previous charge process multiplied by the Coulomb efficiency. By terminating the discharge, one charge-discharge cycle is performed. Then, in order to proceed with the next charge-discharge cycle, the charging process may be performed again for the secondary battery, with a resting period between the discharge and charging processes.

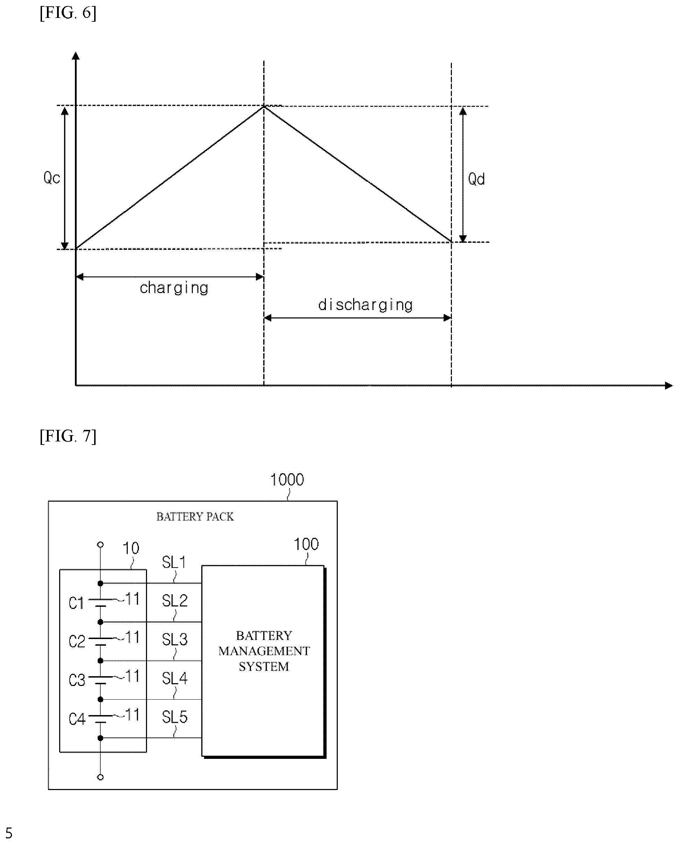

FIG. 6 is a conceptual diagram to illustrate a concept of capacity discharged during a discharge process according to the present invention. As mentioned above, even if the number of charge-discharge cycles is accumulated, the Coulombic efficiency remains constant, so that the capacity Qd to be discharged by the discharging process is set as a value equal to the charge capacity Qc charged by the previous charging process multiplied by the Coulombic efficiency.

The discharging process of the present invention may further include measuring the discharged capacity of the secondary battery, while discharging the secondary battery in order to discharge as much as the discharge capacity of the Qd. The method of measuring the capacity discharged by the discharging process may utilize various technical methods known in the art.

The Coulombic efficiency may be established prior to performing the charge and discharge method of the present invention, and the Coulombic efficiency may be a value calculated by substituting the measured charge and discharge capacities measured in any charge and discharge cycle for the secondary battery to be charged and discharged into Equation 1.

Coulombic efficiency = (discharge capacity $\times$ 100) / charge capacity                    Equation 1:

The segmented charge and discharge method of the present invention determines the end point of the discharge based on the capacity corresponding to the Coulombic efficiency of the previous charge capacity, rather than the voltage, so that the discharge may be terminated when the targeted state of charge is reached.

Furthermore, as the capacity of the secondary battery decreases as the charge and discharge cycles accumulate, the Coulombic efficiency of the secondary battery remains constant, and the discharge capacity Qd that needs to be discharged during the discharge process is calculated using the Coulombic efficiency, which may reflect the capacity degradation due to repeated charging and discharging, and as a result, the charge and discharge may be repeated while keeping the charge and discharge interval constant.

To terminate charging, the segmented charge and discharge method of the present invention may include comparing a voltage measurement value of the secondary battery to a predetermined end-of-charge reference voltage. Also, to terminate discharging, the method may include comparing a discharge capacity measurement value of the secondary battery to a value equal to the capacity charged during a previous charge process multiplied by a Coulombic efficiency.

As such, the segmented charge and discharge method of the present invention requires the voltage measurements values, the discharge capacity measurements values, in order to determine the ending point of the charging process and the discharging process. Thus, the charging process and the discharging process may each further include measuring at least one of a voltage, a current, a temperature, a capacity, and a resistance of the secondary battery.

Here, the temperature is a factor to compensate for differences in voltage or capacity due to temperature differences, and the current and resistance may be measured to calculate the voltage or capacity from measurements of the current and resistance when it is difficult to directly measure the voltage or capacity.

Hereinafter, a battery management system according to another exemplary embodiment of the present invention will be described.

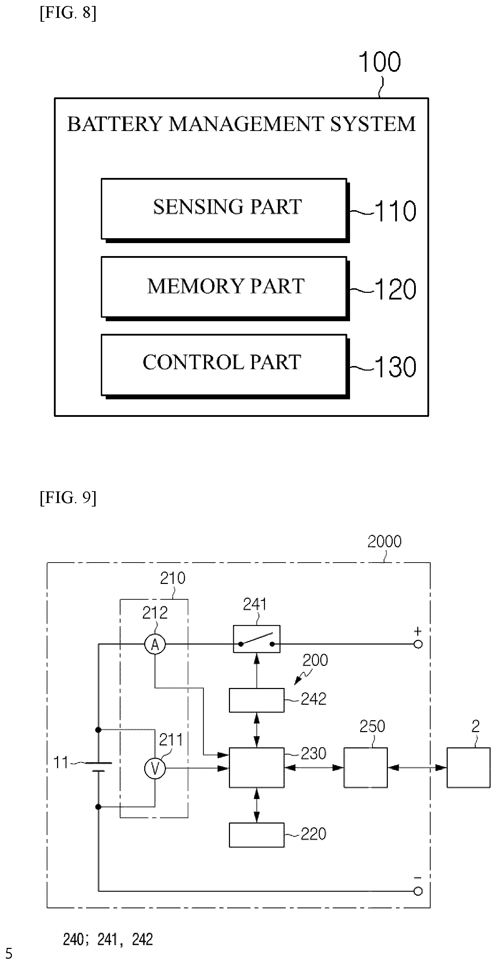

FIG. 7 is a diagram illustrating an exemplary configuration of a battery pack including a battery management system according to an exemplary embodiment of the present invention, and FIG. 8 is a block diagram schematically illustrating a battery management system according to an exemplary embodiment of the present invention.

Referring to FIG. 2, a battery pack 1000 may be provided for installation in an electrical system (e.g., an electric vehicle). The battery management system 100 according to the present invention may be electrically connected to a battery module 10 including a plurality of secondary batteries 11 and may control the charge and discharge of each of the plurality of secondary batteries according to the charge and discharge control algorithm of the present invention.

Further, the battery management system 100 according to the present invention may be included in the battery pack 1000 along with the battery module 10. While FIG. 7 illustrates an example in which the battery pack 1000 includes one battery module 10 and one battery management system 100, the number of battery modules 10 and battery management systems 100 included in the battery pack 1000 is not limited to the number shown in FIG. 7. Similarly, the number of secondary batteries 11 included in the battery module 10 is not limited to the number shown in FIG. 7.

The secondary batteries included in the battery module and battery pack of the present invention include lithium iron phosphate as the positive electrode active material, as described above. A detailed description of this has been previously described and will be omitted.

Referring to FIG. 8, a battery management system 100 according to an exemplary embodiment of the present invention may include a sensing part 110, a memory part 120, and a control part 130.

The sensing part 110 may be configured to measure at least one of a voltage, current, temperature, capacity, and resistance of a secondary battery. That is, the sensing part 110 may be configured to measure at least one of a voltage, current, temperature, capacity, and resistance of each of the secondary batteries 11 included in the battery module 10.

For example, in the embodiment illustrated in FIG. 7, the voltage when the first secondary battery C1, the second secondary battery C2, the third secondary battery C3, and the fourth secondary battery C4 included in the battery module 10 are charged can be measured, respectively. Specifically, the sensing part 110 may measure the voltage of the first secondary battery C1 via the first sensing line SL1 and the second sensing line SL2, and may measure the voltage of the second secondary battery C2 via the second sensing line SL2 and the third sensing line SL3. Further, the sensing part 110 may measure the voltage of the third secondary battery C3 via the third sensing line SL3 and the fourth sensing line SL4, and may measure the voltage of the fourth secondary battery C4 via the fourth sensing line SL4 and the fifth sensing line SL5.

The sensing part 110 may include a voltage sensor (not shown). The voltage sensor is electrically connected to the positive and negative terminals of the secondary battery 11. The voltage sensor may be installed in the charge and discharge path of the secondary battery. In addition, the sensing part 110 may further include a current sensor and a resistance sensor (not shown). These current and resistance sensors may be configured to measure the current in the secondary battery at predetermined times while the secondary battery is being charged or discharged.

The memory part 120 may be operably coupled to the sensing part 110. The memory part 120 is configured to store the Coulombic efficiency of the secondary battery subject to charge and discharge, the end-of-charge reference voltage, and the measurements taken by the sensing part.

The Coulombic efficiency may be a value calculated by substituting the charge and discharge capacities measured in any charge and discharge cycle for the secondary battery to be charged and discharged into Equation 1 below.

Equation 1: Coulombic efficiency = (discharge capacity $\times$ 100) / charge capacity          Equation 1:

The end-of-charge reference voltage may be a voltage value corresponding to SOC b in a profile of the voltage according to the state of charge of the secondary battery to be charged or discharged.

The measurements measured by the sensing part may be measurements of any one or more of voltage, current, capacity, temperature, and resistance measured by the sensing part during a charge and discharge performed in accordance with the charge and discharge control algorithm. These measurements are data required to determine the state of charge of the secondary battery to be charged or discharged.

The memory part 120 is not particularly limited in type as long as it is a means for storing information of a publication known to be capable of recording, erasing, and updating data. In one example, the memory part 120 may include at least one type of storage medium among a flash memory type, a hard disk type, a solid state disk type, a silicon disk drive type, a multimedia card micro type, a random access memory (RAM), a static random access memory (SRAM), a read-only memory (ROM), electrically erasable programmable read-only memory (EEPROM), and programmable read-only memory (PROM).

The control part 130 includes a charge/discharge control algorithm, and controls the secondary battery to charge and discharge according to the charge/discharge control algorithm.

The charge/discharge control algorithm is configured to repeatedly charge and discharge the secondary battery over a state of charge interval of SOC a to SOC b, wherein, in the case of charging, the charging is terminated when a measured voltage value of the secondary battery reaches an end-of-charge reference voltage, and in the case of discharging, the discharging is terminated when a measured discharge capacity reaches a value equal to a capacity Qc charged during the charging process multiplied by a Coulombic efficiency.

(where a<b, and a is a value greater than or equal to 0% and less than 100%, and b is a value greater than 0% and less than or equal to 100%)

The charge/discharge control algorithm of the present invention may be configured such that the SOC a is set within a state of charge range of the plateau interval where the rate of change of the voltage (dV/dQ) with respect to the change in capacity of the secondary battery is 0.

Further, the charge/discharge control algorithm may be configured such that the SOC b is set outside the range of the state of charge of the plateau interval.

The control part 130 may receive, from the memory part 120, the Coulombic efficiency, the end-of-charge reference voltage, and the measurements to determine when to end charge and when to end discharge. The control part 130 may be configured to communicate electrical signals to and from the memory part 120 within the battery management system 100.

The control part 130 may be configured to calculate a discharge capacity Qd based on the discharge capacity to be discharged during the discharge process. That is, the control part 130 receives from the memory part 120 the charged capacity Qc that was charged in the previous charging process and the Coulombic efficiency, and calculates the capacity Qd to be discharged in the discharging process by substituting it into Equation 2.

$$\text{Equation 2: } Qd = Qc \times \text{Coulomb efficiency}$$

The control part 130 may optionally include processors, application-specific integrated circuits (ASICs), other chipsets, logic circuits, registers, communication modems, data processing devices, and the like known in the art to execute the various control logic performed by the battery management system 100 according to an exemplary embodiment of the present invention. Further, when the control logic is implemented as software, the control part 130 may be implemented as a set of program modules. In this case, the program modules may be stored in a memory part and may be executed by a processor.

FIG. 9 is a schematic diagram of a battery pack including a battery management system according to another exemplary embodiment of the present invention. Referring to FIG. 9, the battery management system 200 may further include a switching part 240 for turning on-off an electrical connection between the secondary battery 11 and the charger, and an interface part 250.

The switching part 240 may include a switch 241 and a switch driver 242. The switch 241 is installed in the path of the current for charging and discharging the secondary battery 11. While the switch 241 is turned on, charging and discharging of the secondary battery 11 is possible. The switch 241 may be a mechanical relay that is turned on-off by the magnetic force of a coil, or it may be a semiconductor switch such as a metal oxide semiconductor field effect transistor (MOSFET). Charging and discharging of the secondary battery 11 is stopped while the switch 241 is turned off. The switch 241 may be turned on in response to a first control signal, and may be turned off in response to a second control signal.

A switch driver 242 may be electrically connected to the switch 241 and the control part 230, and is configured to selectively output the first control signal or the second control signal to the switch 241 in response to a command from the control part 230. The control part 230 may command the switch driver 242 to turn the switch 241 on or off when at least one of the predetermined events occurs.

The interface part 250 is configured to support wired or wireless communication between the control part 230 and an upper-level controller 2 of the electrical system 1 (e.g., an electronic control unit (ECU)). The wired communication may be, for example, Controller Area Network (CAN) communication, and the wireless communication may be, for example, Zigbee or Bluetooth communication. Of course, the type of communication protocol is not particularly limited, as long as it supports wired or wireless communication between the control part 230 and the upper-level controller 2.

The interface part 250 may include an output device (not shown), such as a display, speaker, or the like, to provide the results of the process of charging and discharging the secondary battery 11 performed by the control part 230 in a form recognizable to the user. The interface part 250 may include an input device (not shown), such as a mouse, keyboard, or the like, to receive data input from a user.

The embodiments of the present invention described above are not limited to the battery management system 100 and method, but may also be implemented through a program realizing functions corresponding to the configurations of the embodiments of the present invention or a recording medium on which the program is recorded, and such implementation will be readily apparent to a person skilled in the art from the foregoing description of the embodiments.

Although the invention has been described above by means of limited embodiments and drawings, the present invention is not limited thereby, and various modifications and variations can be made by those having ordinary knowledge in the technical field to which the present invention belongs, within the equitable scope of the technical idea of the present invention and the claims of the patent that will be described below.

Furthermore, the present invention described above is not limited by the foregoing embodiments and accompanying drawings, as various substitutions, modifications, and changes are possible without departing from the technical idea of the present invention to one having ordinary knowledge in the technical field to which the present invention belongs, and all or part of each embodiment may be optionally combined to make various modifications.

[Reference numerals]

    1: ELECTRICAL SYSTEM
    2: UPPER-LEVEL CONTROLLER
    10: BATTERY MODULE
    11: SECONDARY BATTERY
    1000: BATTERY PACK
    100, 200: BATTERY MANAGEMENT SYSTEM
    110, 210: SENSING PART
    120, 220: MEMORY PART
    130, 230: CONTROL PART
    240: SWITCHING PART
    250: INTERFACE PART

**Claims**

1. A segmented charge and discharge method of a secondary battery (11) for charging and discharging the secondary battery (11) in a state of charge interval of SOC a to SOC b, wherein a<b, and a is a value greater than or equal to 0% and less than 100%, and b is a value greater than 0% and less than or equal to 100%, the method comprising:

   a charging process for charging the secondary battery (11); and a discharging process for discharging the charged secondary battery (11), and the charging and discharging processes are repeated, wherein
   the charging process ends charging when a measured voltage value of the secondary battery (11) reaches an end-of-charge reference voltage,
   **characterized in that**
   the discharging process ends discharging when a measured discharge capacity reaches a value equal to a capacity Qc charged during the charging process multiplied by a Coulombic efficiency.

2. The segmented charge and discharge method of the secondary battery (11) of claim 1, wherein the secondary battery (11) includes lithium iron phosphate as a positive electrode active material.

3. The segmented charge and discharge method of the secondary battery (11) of claim 1, wherein the Coulombic efficiency is calculated by substituting charge and discharge capacities measured in a random charge and discharge cycle for the secondary battery (11) subject to charge and discharge into an equation below:

$$\text{Coulombic efficiency} = (\text{discharge capacity} \times 100) / \text{charge capacity}.$$

4. The segmented charge and discharge method of the secondary battery (11) of claim 1, wherein SOC a is set within a state of charge range of a plateau interval where a rate of change in voltage (dV/dQ) with respect to a capacity change of the secondary battery (11) is 0.

5. The segmented charge and discharge method of the secondary battery (11) of claim 4, wherein SOC b is set outside a state of charge range of the plateau interval.

6. The segmented charge and discharge method of the secondary battery (11) of claim 1, wherein the end-of-charge reference voltage is set to a voltage value corresponding to SOC b in a profile of a voltage according to a state of charge of the secondary battery (11) to be charged and discharged.

7. The segmented charge and discharge method of a secondary battery (11) of claim 1, wherein each of the charging and discharging processes further includes measuring at least one of voltage, current, temperature, capacity, and resistance of the secondary battery (11).

8. A battery management system (100, 200) comprising:

   a sensing part (110, 210) for measuring at least one of voltage, current, temperature, capacity, and resistance of a secondary battery (11);
   a control part (130, 230) for controlling charge and discharge of the secondary battery (11) according to a charge/discharge control algorithm, wherein
   the charge/discharge control algorithm is configured to repeatedly charge and discharge the secondary battery (11) over a state of charge interval from SOC a to SOC b, wherein a<b, and a is a value greater than or equal to 0% and less than 100%, and b is a value greater than 0% and less than or equal to 100%, wherein
   during charging, the charging is terminated when a measured voltage value of the secondary battery (11) reaches an end-of-charge reference voltage,
   **characterized in that**
   during discharging, the discharging is terminated when a measured discharge capacity reaches a value equal to a capacity Qc charged during the charging process multiplied by a Coulombic efficiency.

9. The battery management system (100, 200) of claim 8, wherein the Coulombic efficiency is calculated by substituting charge and discharge capacities measured in a random charge and discharge cycle for the secondary battery (11) subject to charge and discharge into an equation 1 below:

$$\text{Coulombic efficiency} = (\text{discharge capacity} \times 100) \,/\, \text{charge capacity}$$

10. The battery management system (100, 200) of claim 8, further comprising
a memory part (120, 220) for storing the Coulombic efficiency, the end-of-charge reference voltage, and measurement values measured by the sensing part (110, 210) of the secondary battery (11).

11. The battery management system (100, 200) of claim 8, wherein
the charge/discharge control algorithm is configured to set SOC a within a state of charge range of a plateau interval where a rate of change in voltage (dV/dQ) with respect to a capacity change of the secondary battery (11) is 0.

12. The battery management system (100, 200) of claim 11, wherein
the charge/discharge control algorithm is configured to set SOC b outside a state of charge range of the plateau interval.

13. The battery management system (100, 200) of claim 8, wherein
the end-of-charge reference voltage is set to a voltage value corresponding to SOC b in a profile of a voltage according to a state of charge of the secondary battery (11) to be charged and discharged.

14. The battery management system (100, 200) of claim 8, further comprising
a switching part (240) for turning on and off an electrical connection between the secondary battery (11) and a charger.

15. A battery pack (1000) comprising:

a battery management system (100, 200) according to claim 8; and
a plurality of secondary batteries (11) including lithium iron phosphate as a positive electrode active material.

**Patentansprüche**

1. Segmentiertes Lade- und Entladeverfahren für eine Sekundärbatterie (11) zum Laden und Entladen der Sekundärbatterie (11) in einem Ladezustandsintervall von SOC a bis SOC b, wobei a < b gilt und a ein Wert größer oder gleich 0 % und kleiner als 100 % ist und b ein Wert größer als 0 % und kleiner oder gleich 100 % ist, wobei das Verfahren umfasst:

einen Ladevorgang zum Laden der Sekundärbatterie (11); und einen Entladevorgang zum Entladen der geladenen Sekundärbatterie (11), wobei die Lade- und Entladevorgänge wiederholt werden, wobei der Ladevorgang beendet wird, wenn ein gemessener Spannungswert der Sekundärbatterie (11) eine Ladeend-Referenzspannung erreicht,
**dadurch gekennzeichnet, dass**
der Entladevorgang die Entladung beendet, wenn eine gemessene Entladekapazität einen Wert erreicht, der gleich einer während des Ladevorgangs geladenen Kapazität Qc multipliziert mit einer Coulomb-Effizienz ist.

2. Verfahren zum segmentierten Laden und Entladen der Sekundärbatterie (11) nach Anspruch 1, wobei
die Sekundärbatterie (11) Lithium-Eisenphosphat als Aktivmaterial der positiven Elektrode enthält.

3. Verfahren zum segmentierten Laden und Entladen der Sekundärbatterie (11) nach Anspruch 1, wobei
die Coulomb-Effizienz berechnet wird, indem die in einem zufälligen Lade- und Entladezyklus für die zu ladende und zu entladende Sekundärbatterie (11) gemessenen Lade- und Entladekapazitäten in die folgende Gleichung eingesetzt werden:

$$\text{Coulomb- Effizienz} = (\text{Entladekapazität} \times 100) \,/\, \text{Ladekapazität.}$$

4. Verfahren zum segmentierten Laden und Entladen der Sekundärbatterie (11) nach Anspruch 1, wobei
SOC a innerhalb eines Ladezustandsbereichs eines Plateau-Intervalls eingestellt wird, in dem die Änderungsrate der Spannung (dV/dQ) in Bezug auf eine Kapazitätsänderung der Sekundärbatterie (11) 0 beträgt.

5. Verfahren zum segmentierten Laden und Entladen der Sekundärbatterie (11) nach Anspruch 4, wobei SOC b außerhalb eines Ladezustandsbereichs des Plateau-Intervalls eingestellt wird.

6. Verfahren zum segmentierten Laden und Entladen der Sekundärbatterie (11) nach Anspruch 1, wobei die Ladeend-Referenzspannung auf einen Spannungswert eingestellt wird, der SOC b in einem Spannungsprofil gemäß dem Ladezustand der zu ladenden und zu entladenden Sekundärbatterie (11) entspricht.

7. Verfahren zum segmentierten Laden und Entladen der Sekundärbatterie (11) nach Anspruch 1, wobei die Lade- und Entladevorgänge ferner das Messen wenigstens einer der Größen Spannung, Strom, Temperatur, Kapazität und Widerstand der Sekundärbatterie (11) umfassen.

8. Batteriemanagementsystem (100, 200), umfassend:

einen Erfassungsteil (110, 210) zum Messen wenigstens einer der Größen Spannung, Strom, Temperatur, Kapazität und Widerstand einer Sekundärbatterie (11);
einen Regelteil (130, 230) zum Steuern des Lade- und Entladevorgangs der Sekundärbatterie (11) gemäß einem Lade-/Entlade-Steueralgorithmus, wobei
der Lade-/Entlade-Regelungsalgorithmus so konfiguriert ist, dass er die Sekundärbatterie (11) wiederholt über ein Ladezustandsintervall von SOC a bis SOC b lädt und entlädt, wobei a < b ist und a ein Wert größer oder gleich 0 % und kleiner als 100 % ist und b ein Wert größer als 0 % und kleiner oder gleich 100 % ist, wobei während des Ladevorgangs der Ladevorgang beendet wird, wenn ein gemessener Spannungswert der Sekundärbatterie (11) eine Ladeend-Referenzspannung erreicht, **dadurch gekennzeichnet, dass**
während des Entladevorgangs der Entladevorgang beendet wird, wenn eine gemessene Entladekapazität einen Wert erreicht, der gleich einer während des Ladevorgangs geladenen Kapazität Qc multipliziert mit einer Coulomb-Effizienz ist.

9. Batteriemanagementsystem (100, 200) nach Anspruch 8, wobei
die Coulomb-Effizienz berechnet wird, indem die in einem zufälligen Lade- und Entladezyklus für die zu ladende und zu entladende Sekundärbatterie (11) gemessenen Lade- und Entladekapazitäten in die nachstehende Gleichung 1 eingesetzt werden:

$$\text{Coulomb-Effizienz} = (\text{Entladekapazität} \times 100) / \text{Ladekapazität}$$

10. Batteriemanagementsystem (100, 200) nach Anspruch 8, das ferner umfasst
ein Speicherteil (120, 220) zum Speichern der Coulomb-Effizienz, der Ladeend-Referenzspannung und der vom Erfassungsteil (110, 210) der Sekundärbatterie (11) gemessenen Messwerte.

11. Batteriemanagementsystem (100, 200) nach Anspruch 8, wobei
der Lade-/Entlade-Regelungsalgorithmus so konfiguriert ist, dass er den Ladezustand SOC a innerhalb eines Ladezustandsbereichs eines Plateau-Intervalls einstellt, in dem die Änderungsrate der Spannung (dV/dQ) in Bezug auf eine Kapazitätsänderung der Sekundärbatterie (11) 0 beträgt.

12. Batteriemanagementsystem (100, 200) nach Anspruch 11, wobei
der Lade-/Entlade-Regelungsalgorithmus so konfiguriert ist, dass er SOC b außerhalb eines Ladezustandsbereichs des Plateau-Intervalls einstellt.

13. Batteriemanagementsystem (100, 200) nach Anspruch 8, wobei
die Referenzspannung für das Ladeende auf einen Spannungswert eingestellt wird, der dem Ladezustand b in einem Spannungsprofil entspricht, das sich nach dem Ladezustand der zu ladenden und zu entladenden Sekundärbatterie (11) richtet.

14. Batteriemanagementsystem (100, 200) nach Anspruch 8, ferner umfassend
einen Schaltteil (240) zum Ein- und Ausschalten einer elektrischen Verbindung zwischen der Sekundärbatterie (11) und einem Ladegerät.

15. Batteriepack (1000), umfassend:

ein Batteriemanagementsystem (100, 200) gemäß Anspruch 8; und
eine Vielzahl von Sekundärbatterien (11), die Lithium-Eisenphosphat als Aktivmaterial der positiven Elektrode enthalten.

**Revendications**

1. Procédé de charge/décharge divisée d'une batterie rechargeable (11) pour charger et décharger la batterie rechargeable (11) dans un intervalle d'état de charge de SOC a à SOC b, dans lequel a<b, et a est une valeur égale ou supérieure à 0 % et inférieure à 100 %, et b est une valeur supérieure à 0 % et égale ou inférieure à 100 %, le procédé comprenant :

   un processus de charge pour charger la batterie rechargeable (11) ; et un processus de décharge pour décharger la batterie rechargeable (11) chargée, et les processus de charge et de décharge sont répétés, dans lequel le processus de charge termine la charge quand une valeur de tension mesurée de la batterie rechargeable (11) atteint une tension de référence de fin de charge,
   **caractérisé en ce que**
   le processus de décharge termine la décharge quand une capacité de décharge mesurée atteint une valeur égale à une capacité Qc chargée durant le processus de charge multipliée par une efficacité coulombique.

2. Procédé de charge/décharge divisée de la batterie rechargeable (11) selon la revendication 1, dans lequel la batterie rechargeable (11) inclut du phosphate de fer lithié comme matériau actif d'électrode positive.

3. Procédé de charge/décharge divisée de la batterie rechargeable (11) selon la revendication 1, dans lequel l'efficacité coulombique est calculée en substituant des capacités de charge et de décharge mesurées dans un cycle aléatoire de charge et de décharge pour la batterie rechargeable (11) sous réserve de la charge et la décharge dans une équation ci-dessous :

$$\text{Efficacité coulombique} = (\text{capacité de décharge} \times 100) / \text{capacité de charge.}$$

4. Procédé de charge/décharge divisée de la batterie rechargeable (11) selon la revendication 1, dans lequel SOC a est réglé dans une plage d'état de charge d'un intervalle de plateau où un taux de changement de tension (dV/dQ) par rapport à un changement de capacité de la batterie rechargeable (11) est 0.

5. Procédé de charge/décharge divisée de la batterie rechargeable (11) selon la revendication 4, dans lequel SOC b est réglé en dehors d'une plage d'état de charge de l'intervalle de plateau.

6. Procédé de charge/décharge divisée de la batterie rechargeable (11) selon la revendication 1, dans lequel la tension de référence de fin de charge est réglée à une valeur de tension correspondant à SOC b dans un profil d'une tension en fonction d'un état de charge de la batterie rechargeable (11) à charger et décharger.

7. Procédé de charge/décharge divisée d'une batterie rechargeable (11) selon la revendication 1, dans lequel les processus de charge et décharge comprennent chacun en outre au moins une mesure parmi la tension, le courant, la température, la capacité et le résistance de la batterie rechargeable (11).

8. Système de gestion de batterie (100, 200) comprenant :

   une partie détection (110, 210) pour mesurer au moins soit la tension, le courant, la température, la capacité ou le résistance d'une batterie rechargeable (11) ;
   une partie contrôle (130, 230) pour contrôler la charge et la décharge de la batterie rechargeable (11) selon un algorithme de contrôle de charge/décharge, dans lequel
   l'algorithme de contrôle charge/décharge est configuré pour charger et décharger de manière répétée la batterie rechargeable (11) pendant un intervalle d'état de charge de SOC a à SOC b, dans lequel a<b, et a est une valeur égale ou supérieure à 0 % et inférieure à 100 %, et b est une valeur supérieure à 0 % et égale ou inférieure à 100 %, dans lequel
   durant une charge, la charge est terminée quand une valeur de tension mesurée de la batterie rechargeable (11) atteint une tension de référence de fin de charge,

**caractérisé en ce que**

durant une décharge, la décharge est terminée quand une capacité de décharge mesurée atteint une valeur égale à une capacité Qc chargée durant le processus de charge multipliée par une efficacité coulombique.

9. Système de gestion de batterie (100, 200) selon la revendication 8, dans lequel
l'efficacité coulombique est calculée en substituant des capacités de charge et de décharge mesurées dans un cycle aléatoire de charge et de décharge pour la batterie rechargeable (11) sous réserve de la charge et la décharge dans une équation 1 ci-dessous :

$$\text{Efficacité coulombique} = (\text{capacité de décharge} \times 100) / \text{capacité de charge}$$

10. Système de gestion de batterie (100, 200) selon la revendication 8, comprenant en outre
une partie mémoire (120, 220) pour stocker l'efficacité coulombique, la tension de référence de fin de charge, et la mesure des valeurs mesurées par la partie détection (110, 210) de la batterie rechargeable (11).

11. Système de gestion de batterie (100, 200) selon la revendication 8, dans lequel
l'algorithme de contrôle de charge/décharge est configuré pour régler SOC a dans une plage d'état de charge d'un intervalle de plateau où un taux de changement de tension (dV/dQ) par rapport à un changement de capacité de la batterie rechargeable (11) est 0.

12. Système de gestion de batterie (100, 200) selon la revendication 11, dans lequel
l'algorithme de contrôle de charge/décharge est configuré pour régler SOC b en dehors d'une plage d'état de charge de l'intervalle de plateau.

13. Système de gestion de batterie (100, 200) selon la revendication 8, dans lequel
la tension de référence de fin de charge est réglée à une valeur de tension correspondant à SOC b dans un profil d'une tension en fonction d'un état de charge de la batterie rechargeable (11) à charger et décharger.

14. Système de gestion de batterie (100, 200) selon la revendication 8, comprenant en outre
une partie commutation (240) pour mettre sous et hors tension une connexion électrique entre la batterie rechargeable (11) et un chargeur.

15. Bloc-batterie (1000) comprenant :

un système de gestion de batterie (100, 200) selon la revendication 8 ; et
une pluralité de batteries rechargeables (11) incluant du phosphate de fer lithié comme matériau actif d'électrode positive.

[FIG. 1]

[FIG. 2]

[FIG. 3]

[FIG. 4]

[FIG. 5]

[FIG. 6]

[FIG. 7]

[FIG. 8]

100

BATTERY MANAGEMENT SYSTEM

SENSING PART ~110

MEMORY PART ~120

CONTROL PART ~130

[FIG. 9]

2000

210

212

241

200

242

211

230

250

2

11

220

240; 241, 242

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 207852740 U

- JP 6477733 B

### Non-patent literature cited in the description

- Lithium-ion battery state-of-charge estimation based on deconstructed equivalent circuit at different open-circuit voltage relaxation times. **CHENG XI-MING et al.** Journal of Zhejiang University Science A. Zhejiang University Press, 11 April 2017, vol. 18, 256-267